# EUROPEAN PATENT APPLICATION

(11) **EP 4 450 591 A1**
(43) Date of publication of application: **23.10.2024**
(21) Application number: 22907339.0
(22) Date of filing: 08.12.2022
(51) Int. Cl.: C09K 21/04, C08K 5/3477, C08K 5/529, C08L 83/04, C09K 21/10, C09K 21/12

(54) **FLAME RETARDING COMPOSITION, FLAME-RETARDANT RESIN COMPOSITION, AND MOLDED ARTICLE**

(30) Priority: 16.12.2021 JP 2021204630
(71) Applicant: Adeka Corporation, Tokyo 116-8554 (JP)
(72) Inventor: KASAI, Chikako, Tokyo 116-8554 (JP); AOYAMA, Etsuko, Tokyo 116-8554 (JP); NAKAMURA, Michio, Tokyo 116-8554 (JP)
(74) Representative: Gill Jennings & Every LLP
(86) International application number: PCT/JP2022/045228
(87) International publication number: WO 2023/112812

(57) **Abstract**

Provided are: a flame retarding composition that is used to make a synthetic resin flame-retardant and that has excellent flame resistance and water resistance; a flame-retardant resin composition containing the same; and a molded article thereof. This flame retarding composition is in powder form and contains a polyphosphate (A). The ratio of particles having a (p2) particle diameter of 80 µm or greater but less than 170 µm is 9 to 99.9 vol%. The flame-retardant resin composition contains this flame retarding composition and a thermoplastic resin. The molded article is produced using the flame-retardant resin composition.

## Description

### TECHNICAL FIELD

The present invention relates to: a flame retarding composition excellent in flame resistance and water resistance; a flame-retardant resin composition including it; and a molded article thereof.

### BACKGROUND ART

A technique of blending a resin with a phosphate compound such as ammonium polyphosphate, melamine polyphosphate, or piperazine polyphosphate has been known as a technique of allowing a synthetic resin to be flame-retardant. However, such phosphate compounds have had a drawback of being insufficient in water resistance while imparting excellent flame resistance to synthetic resins. When the water resistance is insufficient, contact with water, high humidity conditions, and the like may result in problems of the deterioration of flame resistance and the deterioration of the external appearance of a resin surface due to the elution of a flame retarding component, and therefore, possible applications have been limited.

Techniques for improving the water resistance of the phosphate compounds have been developed for this problem until now. For example, Patent Document 1 describes a technique of coating a surface of ammonium polyphosphate with a thermosetting resin. Patent Document 2 describes a flame retarding composition formed by treatment of adding silicone oil having a specific viscosity to the piperazine salt and melamine salt of an inorganic phosphorus compound. Patent Document 3 describes a technique of blending a thermoplastic resin with a phosphate compound and polycarbodiimide.

### RELATED ART DOCUMENTS

### PATENT DOCUMENTS

[Patent Document 1] JP H9-235407A
[Patent Document 2] WO 2005/080494
[Patent Document 3] JP 2009-292965A

### SUMMARY OF THE INVENTION

### PROBLEMS TO BE SOLVED BY THE INVENTION

However, certain effects in water resistance have been obtained but have been insufficient in accordance with the techniques described in Patent Documents 1 to 3 above, and a technique for obtaining a flame retarding composition having higher water resistance performance has been desired.

Thus, an objective of the present invention is to provide a flame retarding composition excellent in flame resistance and water resistance, a flame-retardant resin composition including it, and a molded article thereof.

### MEANS FOR SOLVING THE PROBLEMS

As a result of intensive examination for solving the problems described above, the present inventors found that water resistance can be improved by using a flame retarding composition having a certain particle size distribution, and the present invention was thus accomplished.

In other words, in accordance with the present invention, there is provided a flame retarding composition that is powdery and includes a polyphosphate (A), wherein a rate of particles (p2) having a particle diameter of 80 µm or more and less than 170 µm is 9 to 99.9% by volume.

It is preferable that the flame retarding composition of the present invention includes a particle size distribution in which
a rate of particles (p1) having a particle diameter of less than 80 µm is 35 to 90.9% by volume,
the rate of the particles (p2) having a particle diameter of 80 µm or more and less than 170 µm is 9 to 64.9% by volume, and
a rate of particles (p3) having a particle diameter of 170 µm or more is 0.1 to 50% by volume.

In the flame retarding composition of the present invention, a particle diameter D₅₀ corresponding to an accumulation of 50% in a cumulative particle size distribution based on a volume is preferably 10 µm or more and 150 µm or less.

In the flame retarding composition of the present invention, the polyphosphate (A) is preferably one or more selected from the following components (a1) and (a2):
the component (a1): a compound represented by the following Formula (1); and
the component (a2): a compound represented by the following Formula (2), 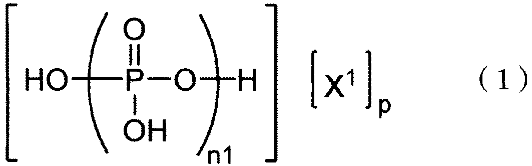
in Formula (1), n1 represents the number of 1 to 100, X¹ represents ammonia or a triazine derivative represented by the following Formula (1-A), and p represents a number satisfying 0 < p ≤ n1 + 2, 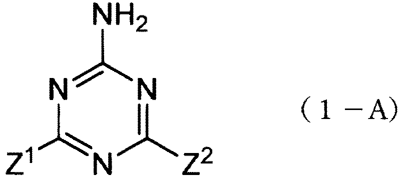 in Formula (1-A), Z¹ and Z² each independently represent any group selected from a group consisting of a -NR¹¹R¹² group, a hydroxyl group, a mercapto group, a straight-chained or branched alkyl group having 1 to 10 carbon atoms, a straight-chained or branched alkoxy group having 1 to 10 carbon atoms, a phenyl group, and a vinyl group, and R¹¹ and R¹² each independently represent a hydrogen atom, a straight-chained or branched alkyl group having 1 to 6 carbon atoms, or a methylol group, and 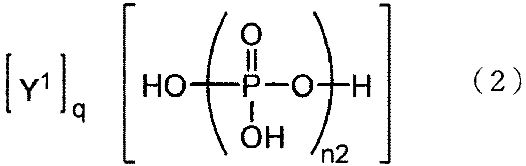
in Formula (2), n2 represents the number of 1 to 100, Y¹ represents [R²¹R²²N(CH₂)ₘNR²³R²⁴], piperazine, or a diamine including a piperazine ring, R²¹, R²², R²³, and R²⁴ each independently represent a hydrogen atom or a straight-chained or branched alkyl group having 1 to 5 carbon atoms, m is an integer from 1 to 10, and q represents a number satisfying 0 < q ≤ n2 + 2.

It is preferable that the flame retarding composition of the present invention includes the component (a1) in which X¹ in Formula (1) is melamine.

It is preferable that the flame retarding composition of the present invention includes the component (a2) in which Y¹ in Formula (2) is piperazine.

It is preferable that the flame retarding composition of the present invention includes: the component (a1) in which X¹ in Formula (1) is melamine; and the component (a2) in which Y¹ in Formula (2) is piperazine.

It is preferable that the flame retarding composition of the present invention includes: the component (a1) in which n1 in Formula (1) is 2; and the component (a2) in which n2 in Formula (2) is 2.

It is preferable that the flame retarding composition of the present invention further includes, as a component (B), one or more selected from a group consisting of silicone oils and silane coupling agents.

Moreover, in accordance with the present invention, a flame-retardant resin composition including the flame retarding composition described above and a thermoplastic resin is provided.

Further, in accordance with the present invention, a molded article formed by using the flame-retardant resin composition described above is provided.

### EFFECTS OF THE INVENTION

In accordance with the present invention, there can be provided: a flame retarding composition excellent in flame resistance and water resistance; a flame-retardant resin composition including it; and a molded article thereof.

### MODE FOR CARRYING OUT THE INVENTION

The present invention is described in detail below with reference to preferred embodiments thereof. First, a flame retarding composition of the present invention is described.

Herein, a polyphosphoric acid refers to one or more pyrophosphoric acids having a condensation degree of 2 and condensed phosphoric acid having a condensation degree of 3 or more, or a mixture thereof. The polyphosphoric acid described above may include an orthophosphoric acid having a condensation degree of 1. Moreover, a polyphosphate refers to a salt compound formed by the polyphosphoric acid described above and a base.

Moreover, herein, a particle diameter and a particle size distribution are measured using a laser diffraction type particle size distribution measurement apparatus. Specifically, they refer to values measured on a volumetric basis, using a laser diffraction type particle size distribution measurement apparatus, for a dispersion solution obtained by putting 0.3 g of a sample in 120 g of methanol and being irradiated with ultrasonic waves for 3 minutes under conditions of an output of 70 W and a frequency of 42 kHz.

### <Flame Retarding Composition>

The flame retarding composition of the present invention is a flame retarding composition that is powdery and includes a polyphosphate (A), wherein a rate of particles (p2) having a particle diameter of 80 µm or more and less than 170 µm is 9 to 99.9% by volume.

In the flame retarding composition of the present invention, the lower limit of the content rate of the particles (p2) having a particle diameter of 80 µm or more and less than 170 µm is 9% by volume or more, and preferably 9.2% by volume or more. As a result, the effect of improving water resistance is obtained. On the other hand, the upper limit of the content rate of the particles (p2) having a particle diameter of 80 µm or more and less than 170 µm is 99.9% by volume or less, preferably 64.9% by volume or less, more preferably 60% by volume or less, and even more preferably 50% by volume or less. As a result, the flame retarding performance of the flame retarding composition can be sufficiently stably exerted.

The flame retarding composition of the present invention
preferably includes a particle size distribution in which
the rate of particles (p1) having a particle diameter of less than 80 µm is 35 to 90.9% by volume,
the rate of the particles (p2) having a particle diameter of 80 µm or more and less than 170 µm is 9 to 64.9% by volume, and
the rate of particles (p3) having a particle diameter of 170 µm or more is 0.1 to 50% by volume,
more preferably includes a particle size distribution in which
the rate of the particles (p1) having a particle diameter of less than 80 µm is 36 to 90.5% by volume,
the rate of the particles (p2) having a particle diameter of 80 µm or more and less than 170 µm is 9 to 60% by volume, and
the rate of the particles (p3) having a particle diameter of 170 µm or more is 0.5 to 30% by volume, and
still more preferably includes a particle size distribution in which
the rate of the particles (p1) having a particle diameter of less than 80 µm is 37 to 89.8% by volume,
the rate of the particles (p2) having a particle diameter of 80 µm or more and less than 170 µm is 9.2 to 50% by volume, and
the rate of the particles (p3) having a particle diameter of 170 µm or more is 1 to 20% by volume.

Moreover, in the flame retarding composition of the present invention, the rate of the particles (p3) having a particle diameter of 170 µm or more is preferably less than each of the rate of the particles (p1) having a particle diameter of less than 80 µm and the rate of the particles (p2) having a particle diameter of 80 µm or more and less than 170 µm.

In the flame retarding composition of the present invention, a particle diameter D₅₀ corresponding to an accumulation of 50% in a cumulative particle size distribution based on a volume is preferably 10 µm or more and 150 µm or less. The lower limit of D₅₀ is preferably 10 µm or more, more preferably 20 µm or more, and still more preferably 30 µm or more. As a result, the effect of improving water resistance is obtained. On the other hand, the upper limit of D₅₀ is preferably 150 µm or less, more preferably 125 µm or less, and still more preferably 110 µm or less. As a result, dispersibility in the case of blending a thermoplastic resin with the flame retarding composition of the present invention is improved, and flame retarding performance can be sufficiently stably exerted.

In the flame retarding composition of the present invention, a particle diameter or a particle size distribution can be controlled by appropriately selecting, for example, a preparation method such as pulverization or classification, or the like. Of these, examples of elements for allowing a particle diameter or a particle size distribution to be in a desired numerical range include appropriate selection of pulverization conditions such as pulverization methods and pulverization times, classification conditions such as cutting of coarse particles, and blending conditions.

Examples of the pulverization means described above include mortars, ball mills, rod mills, tube mills, conical mills, vibratory ball mills, Hyswing ball mills, roller mills, pin mills, hammer mills, attrition mills, jet mills, jetmizers, micronizers, nanomizers, magic mills, micro-atomizers, colloidal mills, premier colloid mills, micron mills, Charlotte colloid mills, rotary cutters, dry medium-stirring mills, and impact type ultrafine grinders. These pulverization means may be used singly, or in combination of two or more kinds thereof.

Examples of the classification means described above include dry classifications such as sieving classification, inertial classification, and centrifugal classification, and wet classifications such as sedimentation classification. Pulverization and classification may be simultaneously performed using a grinder including a classification function.

When the flame retarding composition of the present invention is a mixture of a plurality of components, each component may be subjected to a preparation step such as pulverization or classification and then mixed, or each component may be mixed and then subjected to a preparation step such as pulverization or classification.

The polyphosphate (A) according to the present invention is preferably one or more selected from the following component (a1) and component (a2).

The component (a1) is a compound represented by the following Formula (1).

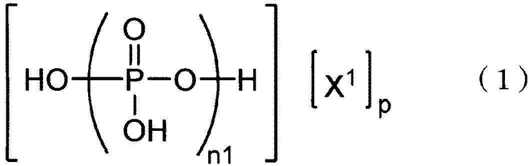

In Formula (1), n1 represents the number of 1 to 100, X¹ represents ammonia or a triazine derivative represented by the following Formula (1-A), and p represents a number satisfying 0 < p ≤ n1 + 2.

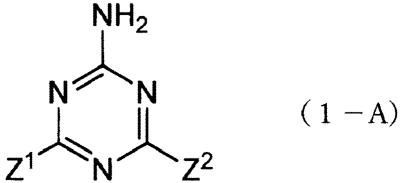

In Formula (1-A), Z¹ and Z² each independently represent any group selected from a group consisting of a -NR¹¹R¹² group, a hydroxyl group, a mercapto group, a straight-chained or branched alkyl group having 1 to 10 carbon atoms, a straight-chained or branched alkoxy group having 1 to 10 carbon atoms, a phenyl group, and a vinyl group, and R¹¹ and R¹² each independently represent a hydrogen atom, a straight-chained or branched alkyl group having 1 to 6 carbon atoms, or a methylol group.

Examples of the straight or branched chain alkyl groups having 1 to 10 carbon atoms represented by Z¹ and Z² in Formula (1-A) include methyl, ethyl, propyl, isopropyl, butyl, secondary butyl, tertiary butyl, isobutyl, pentyl, isopentyl, tertiary pentyl, neopentyl, hexyl, cyclohexyl, heptyl, isoheptyl, tertiary heptyl, n-octyl, isooctyl, tertiary octyl, 2-ethylhexyl, nonyl, and decyl, and examples of the straight or branched chain alkoxy group having 1 to 10 carbon atoms include groups induced by these alkyl groups. Moreover, examples of the straight or branched chain alkyl groups having 1 to 6 carbon atoms represented by R¹¹ and R¹² in the -NR¹¹R¹² group which may be represented by Z¹ and Z² include alkyl groups having 1 to 6 carbon atoms among the alkyl groups mentioned above.

Specific examples of the triazine derivative represented by Formula (1-A) include melamine, acetoguanamine, benzoguanamine, acrylic guanamine, 2,4-diamino-6-nonyl-1,3,5-triazine, 2,4-diamino-6-hydroxy-1,3,5-triazine, 2-amino-4,6-dihydroxy-1,3,5-triazine, 2,4-diamino-6-methoxy-1,3,5-triazine, 2,4-diamino-6-ethoxy-1,3,5-triazine, 2,4-diamino-6-propoxy-1,3,5-triazine, 2,4-diamino-6-isopropoxy-1,3,5-triazine, 2,4-diamino-6-mercapto-1,3,5-triazine, and 2-amino-4,6-dimercapto-1,3,5-triazine.

The component (a1) may be a single compound, or may be a mixture of two or more kinds of which the condensation degrees or the salt kinds are different. The component (a1) preferably includes a melamine salt compound in which X¹ in Formula (1) is melamine. Moreover, the component (a1) preferably includes a pyrophosphate in which n1 in Formula (1) is 2. In the case of using the mixture, the higher content rate of a pyrophosphate in which n1 is 2 is more preferred. As a result, heat resistance can be stably improved.

The component (a2) is a compound represented by the following Formula (2).

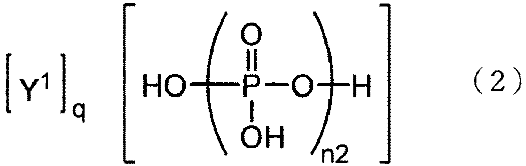

**In** Formula (2), n2 represents the number of 1 to 100, Y¹ represents [R²¹R²²N(CH₂)ₘNR²³R²⁴], piperazine, or a diamine including a piperazine ring, R²¹, R²², R²³, and R²⁴ each independently represent a hydrogen atom or a straight-chained or branched alkyl group having 1 to 5 carbon atoms, m is an integer from 1 to 10, and q represents a number satisfying 0 < q ≤ n2 + 2.

In Formula (2), examples of the compound represented by Y¹ include [R²¹R²²N(CH₂)ₘNR²³R²⁴], piperazine, or a diamine including a piperazine ring. R²¹ to R²⁴ may be the same or different, and represent hydrogen atoms, or straight-chained or branched alkyl groups having 1 to 5 carbon atoms.

Examples of the straight-chained or branched alkyl groups having 1 to 5 carbon atoms, represented by R²¹ to R²⁴ as described above, include straight-chained or branched alkyl groups having 1 to 5 carbon atoms among the alkyl groups mentioned as the specific examples of the alkyl groups represented by Z¹ and Z².

Examples of the above-described diamine including the piperazine ring include compounds in which one or more of the positions 2, 3, 5, and 6 of piperazine are substituted with alkyl groups (preferably having 1 to 5 carbon atoms); and compounds in which the hydrogen atoms of the amino groups at the positions 1 and/or 4 of piperazine are substituted with amino alkyl groups (preferably having 1 to 5 carbon atoms).

Specific examples of the compound represented by Y¹ in Formula (2) include N,N,N',N'-tetramethyldiaminomethane, ethylenediamine, N,N'-dimethylethylenediamine, N,N'-diethylethylenediamine, N,N-dimethylethylenediamine, N,N-diethylethylenediamine, N,N,N',N'-tetramethylethylenediamine, N,N,N',N'-tetraethylethylenediamine, 1,2-propanediamine, 1,3-propanediamine, tetramethylenediamine, pentamethylenediamine, hexamethylenediamine, 1,7-diaminoheptane, 1,8-diaminooctane, 1,9-diaminononane, 1,10-diaminodecane, piperazine, trans-2, 5-dimethylpiperazine, 1,4-bis(2-aminoethyl)piperazine, and 1,4-bis(3-aminopropyl)piperazine.

The component (a2) may be a single compound, or may be a mixture of two or more kinds of which the condensation degrees or salt kinds are different. The component (a2) preferably includes a piperazine salt compound in which Y¹ in Formula (2) is piperazine. Moreover, the component (a2) preferably includes a pyrophosphate in which n2 in Formula (2) is 2. In the case of using a mixture, the higher content rate of the pyrophosphate in which n2 is 2 is more preferred. As a result, heat resistance can be stably improved.

In a method of producing the compounds represented by Formula (1) and Formula (2), for example, a salt of a phosphoric acid and melamine, such as melamine pyrophosphate, can be obtained by mixing sodium pyrophosphate and melamine at an optional ratio, then adding hydrochloric acid to allow reaction, and neutralizing the reactant with sodium hydroxide. Moreover, for example, a salt of a phosphoric acid and piperazine can be easily obtained as a poorly water-soluble precipitation by allowing a phosphoric acid and piperazine to react with each other at an optional ratio in water or an aqueous methanol solution. In such a case, the configuration of such a phosphoric acid as a raw material is not particularly limited. Moreover, the phosphate compound in which n1 or n2 is 2 or more in Formula (1) or Formula (2) may be obtained by heat condensation of an orthophosphate in which n1 or n2 is 1.

The compounds represented by Formula (1) and Formula (2) are obtained in such a manner. These may be used singly, or in combination of two or more kinds thereof. The flame retarding composition including such compounds can impart excellent flame resistance to a resin material.

In the flame retarding composition of the present invention, the component (A) preferably includes both of the component (a1) and the component (a2) in view of flame resistance. In particular, the component (a1) in which X¹ in Formula (1) is melamine and the component (a2) in which Y¹ in Formula (2) is piperazine are more preferably used together in the component (A). Moreover, it is also preferable to use together the component (a1) in which n1 in Formula (1) is 2 and the component (a2) in which n2 in Formula (2) is 2, in the component (A).

With regard to the content rate in a case in which the component (A) according to the present invention includes both of the component (a1) and the component (a2), the mass ratio between the former and the latter is preferably 10:90 to 90:10, more preferably 20:80 to 60:40, still more preferably 25:75 to 55:45, and particularly preferably 30:70 to 50:50 in view of flame resistance.

The flame retarding composition of the present invention may include, as needed, an optional component described later as well as the polyphosphate (A).

It is preferable that the flame retarding composition of the present invention further includes, as a component (B), one or more selected from the group consisting of silicone oils and silane coupling agents. As a result, the prevention of the aggregation of the powdery flame retarding composition, improvement in storage stability, and improvement in dispersibility in a synthetic resin can be achieved. Moreover, water resistance can be improved.

Such a silicone oil as described above can be used without particular limitation as long as being a known silicone oil having a polysiloxane skeleton. The silicone oil described above may be a polymer having a straight-chain polysiloxane skeleton, all the side chains of the polysiloxane may be methyl groups, some of the side chains may have phenyl groups, and some of the side chains may have hydrogen.

Examples of the silicone oils include dimethyl silicone oil in which all the side chains and ends of polysiloxane are methyl groups, methylphenyl silicone oil in which the side chains and ends of polysiloxane are methyl groups and some of the side chains are phenyl groups, methylhydrogene silicone oil in which the side chains and ends of polysiloxane are methyl groups and some of the side chains are hydrogen, and the like, and copolymers thereof. These silicone oils may be partially modified by epoxy modification, amino modification, carboxy modification, or the like. These may be used singly, or in combination of two or more kinds thereof.

Among the silicone oils, dimethyl silicone oil and methylhydrogene silicone oil are preferred, and methylhydrogene silicone oil is more preferred, in view of the prevention of the aggregation of the powdery flame retarding composition, improvement in storage stability, and improvement in dispersibility in a synthetic resin.

As the silane coupling agents described above, examples of silane coupling agents having alkenyl groups include vinyltrimethoxysilane, vinyltriethoxysilane, vinyltriacetoxysilane, vinyltris(2-methoxyethoxy)silane, vinylmethyldimethoxysilane, octenyltrimethoxysilane, allyltrimethoxysilane, and p-styryltrimethoxysilane, examples of silane coupling agents having acryl groups include 3-acryloxypropyltrimethoxysilane and 3-acryloxypropyltriethoxysilane, examples of silane coupling agents having methacryl groups include 3-methacryloxypropylmethyldimethoxysilane, 3-methacryloxypropyltrimethoxysilane, 3-methacryloxypropylmethyldiethoxysilane, 3-methacryloxypropyltriethoxysilane, and methacryloxyoctyltrimethoxysilane, examples of silane coupling agents having epoxy groups include 2-(3,4-epoxycyclohexyl)ethyltrimethoxysilane, 3-glycidoxypropylmethyldimethoxysilane, 3-glycidoxypropyltrimethoxysilane, 3-glycidoxypropylmethyldiethoxysilane, 3-glycidoxypropyltriethoxysilane, and glycidoxyoctyltrimethoxysilane, examples of silane coupling agents having amino groups include N-2-(aminoethyl)-3-aminopropylmethyldimethoxysilane, N-2-(aminoethyl)-3-aminopropyltrimethoxysilane, 3-aminopropyltrimethoxysilane, 3-aminopropyltriethoxysilane, 3-triethoxysilyl-N-(1,3-dimethyl-butylidene)propylamine, N-phenyl-3-aminopropyltrimethoxysilane, N,N'-bis[3-(trimethoxysilyl)propyl]ethylenediamine, and hydrochlorides of N-(vinylbenzyl)-2-aminoethyl-3-aminopropyltrimethoxysilane, examples of silane coupling agents having isocyanurate groups include tris-(trimethoxysilylpropyl)isocyanurate, examples of silane coupling agents having mercapto groups include 3-mercaptopropylmethyldimethoxysilane, 3-mercaptopropyltrimethoxysilane, and 3-mercaptopropyltriethoxysilane, examples of silane coupling agents having ureido groups include 3-ureidopropyltrimethoxysilane and 3-ureidopropyltriethoxysilane, examples of silane coupling agents having sulfide groups include bis(triethoxysilylpropyl)tetrasulfide, examples of silane coupling agents having thioester groups include 3-octanoylthio-1-propyltriethoxysilane, and examples of silane coupling agents having isocyanate groups include 3-isocyanatepropyltriethoxysilane and 3-isocyanatepropyltrimethoxysilane. These may be used singly, or in combination of two or more kinds thereof.

Among these silane coupling agents, silane coupling agents having epoxy groups are preferred, and 2-(3,4-epoxycyclohexyl)ethyltrimethoxysilane, 3-glycidoxypropylmethyldimethoxysilane, 3-glycidoxypropyltrimethoxysilane, 3-glycidoxypropylmethyldiethoxysilane, 3-glycidoxypropyltriethoxysilane, and glycidoxyoctyltrimethoxysilane are more preferred, in view of flame resistance, handleability, and, in addition, the prevention of the aggregation of a flame retarding powder and improvement in storage stability.

When the flame retarding composition of the present invention contains the above-described component (B), the content of the component (B) in the flame retarding composition of the present invention is preferably 0.01 to 5 parts by mass, and more preferably 0.01 to 3 parts by mass, with respect to 100 parts by mass of the component (A), from the viewpoint of enhancing the above-described effect offered by the containment of the component (B).

In particular, the content of a silicone oil in the case of allowing the flame retarding composition of the present invention to contain the silicone oil is preferably 0.01 to 3 parts by mass, and more preferably 0.1 to 1 part by mass, with respect to 100 parts by mass of the component (A), in view of enhancing the above-described effect offered by the containment of the silicone oil.

In particular, the content of a silane coupling agent in the case of allowing the flame retarding composition of the present invention to contain the silane coupling agent is preferably 0.01 to 3 parts by mass, and more preferably 0.1 to 1 part by mass, with respect to 100 parts by mass of the component (A), in view of enhancing the above-described effect of offered by the containment of the silane coupling agent.

Examples of methods of adding the above-described component (B) include a method of mixing the component (A) and the component (B), and a method of spray-drying, adding, and mixing the component (B). Moreover, the addition to the flame retarding composition may be performed by surface-treating all or part of the component (A) with the component (B).

The flame retarding composition of the present invention may include an aid.

Examples of the above-described aid include fire retarding aids, dripping prevention aids, and processing aids.

The above-described fire retarding aid can include a metal oxide or a polyvalent alcohol compound. As a result, the flame resistance of a resin can be improved.

Examples of the above-described metal oxide include titanium oxide, zinc oxide, calcium oxide, magnesium oxide, zirconium oxide, barium oxide, tin dioxide, lead dioxide, antimony oxide, molybdenum oxide, and cadmium oxide. These may be used singly, or in combination of two or more kinds thereof. As a result, the flame resistance of a resin can be improved. Moreover, aggregation can be inhibited from occurring in the flame retarding composition in particulate form. Among the above, zinc oxide is preferred from the viewpoint of flame resistance.

The above-described zinc oxide may be surface-treated, or need not be surface-treated.

As the zinc oxide described above, for example, commercially available products such as Zinc Oxide No. 1 (manufactured by MITSUI MINING & SMELTING CO., LTD.), partial-coating-type zinc oxide (manufactured by MITSUI MINING & SMELTING CO., LTD.), Nanofine 50 (ultrafine particulate zinc oxide having a mean particle diameter of 0.02 µm: manufactured by SAKAI CHEMICAL INDUSTRY CO., LTD.), and Nanofine K (ultrafine particulate zinc oxide coated with zinc silicate having a mean particle diameter of 0.02 µm: manufactured by SAKAI CHEMICAL INDUSTRY CO., LTD.) may be used.

The polyvalent alcohol compound described above is a compound in which a plurality of hydroxy groups are bound, and examples thereof include pentaerythritol, dipentaerythritol, tripentaerythritol, polypentaerythritol, neopentyl glycol, trimethylolpropane, ditrimethylolpropane, 1,3,5-tris(2-hydroxyethyl)isocyanurate (THEIC), polyethylene glycol, glycerin, diglycerol, mannitol, maltitol, lactitol, sorbitol, erythritol, xylitol, xylose, sucrose (saccharose), trehalose, inositol, fructose, maltose, and lactose. Among these polyvalent alcohol compounds, one or more selected from the group of pentaerythritols such as pentaerythritol, dipentaerythritol, tripentaerythritol, and polypentaerythritol, and condensates of pentaerythritols are preferred, dipentaerythritol and condensates of pentaerythritols are particularly preferred, and dipentaerythritol is most preferred. Moreover, THEIC and sorbitol can also be preferably used. These may be used singly, or in combination of two or more kinds thereof.

Examples of the above-described dripping prevention aids include lamellar silicates, fluorine-based dripping prevention aids, and silicone rubbers. These enable suppression of dripping in combustion of a resin.

The above-described lamellar silicate is a laminar silicate mineral, may be natural or synthetic, and is not particularly limited.

Examples of the above-described lamellar silicate include smectite-based clay minerals such as montmorillonite, saponite, hectorite, beidellite, stevensite, and nontronite, vermiculite, halloysite, swellable mica, and talc. These may be used singly, or in combination of two or more kinds thereof. Among them, saponite or talc is preferred from the viewpoint of prevention of dripping, and talc is particularly preferred from the viewpoint of economical efficiency such as a price.

The above-described lamellar silicate may have cations between layers.

The above-described cations may be metal ions, or some or all thereof may be cations other than the metal ions, such as organic cations, (quaternary) ammonium cations, and phosphonium cations.

Examples of the above-described metal ions include sodium ions, potassium ions, calcium ions, magnesium ions, lithium ions, nickel ions, copper ions, and zinc ions.

Examples of the above-described organic cations or quaternary ammonium cations include lauryltrimethylammonium cations, stearyltrimethylammonium cations, trioctylmethylammonium cations, distearyldimethylammonium cations, dihydrogenated beef tallow dimethylammonium cations, and distearyldibenzylammonium cations. These may be used singly, or in combination of two or more kinds thereof.

Specific examples of the above-described fluorine-based dripping prevention aids include fluorine resins such as polytetrafluoroethylene, polyvinylidene fluoride, and polyhexafluoropropylene, and perfluoroalkane sulfonic acid alkali metal salt compounds or perfluoroalkane sulfonic acid alkali earth metal salts such as sodium perfluoromethanesulfonate, potassium perfluoro-n-butanesulfonate, potassium perfluoro-t-butanesulfonate, sodium perfluorooctanesulfonate, and calcium perfluoro-2-ethylhexanesulfonate. Especially, polytetrafluoroethylene is preferred in view of dripping prevention properties. These may be used singly, or in combination of two or more kinds thereof.

The above-described processing aids can be selected from known processing aids as appropriate, and a processing aid based on acrylic acid may be included.

Examples of the processing aid based on acrylic acid may include: homopolymers or copolymers of alkyl methacrylates such as methyl methacrylate, ethyl methacrylate, and butyl methacrylate; copolymers of the above-described alkyl methacrylates with alkyl acrylates such as methyl acrylate, ethyl acrylate, and butyl acrylate; copolymers of the above-described alkyl methacrylates with aromatic vinyl compounds such as styrene, α-methylstyrene, and vinyl toluene; and copolymers of the above-described alkyl methacrylates with vinylcyanide compounds such as acrylonitrile and methacrylonitrile. These may be used singly, or in combination of two or more kinds thereof.

The flame retarding composition of the present invention may include a powder dust inhibitor.

Examples of the above-described powder dust inhibitor include aliphatic dicarboxylic acid ether ester compounds and the above-described silane coupling agents.

The flame retarding composition of the present invention may include an additional component as long as the effects of the present invention are not impaired. An additive that is usually used for modifying a thermoplastic resin can be used as the additional component, and examples thereof include antioxidants, light stabilizers, ultraviolet absorbents, crystal nucleating agents, clarifying agents, plasticizers, lubricants, flame retardants other than the polyphosphate (A) according to the present invention, reinforcement materials, crosslinking agents, antistatic agents, metal soaps, fillers, anti-fogging agents, plate-out inhibitors, fluorescent agents, mildewproofing agents, germicides, expanding agents, metal deactivators, mold release agents, pigments, and dyes. These may be used singly, or in combination of two or more kinds thereof.

Examples of the antioxidants include phenol-based antioxidants, phosphite-based antioxidants, thioether-based antioxidants, and other antioxidants.

Examples of the phenol-based antioxidants include 2,6-di-tert-butyl-p-cresol, 2,6-diphenyl-4-octadecyloxyphenol, distearyl(3,5-di-tert-butyl-4-hydroxybenzyl)phosphonate, 1,6-hexamethylenebis[(3,5-di-tert-butyl-4-hydroxyphenyl)propionamide], 4,4'-thiobis(6-*tert-*butyl-m-cresol), 2,2'-methylenebis(4-methyl-6-*tert*-butylphenol), 2,2'-methylenebis(4-ethyl-6-*tert*-butylphenol), 4,4'-butylidenebis(6-*tert*-butyl-m-cresol), 2,2'-ethylidenebis(4,6-di-*tert-*butylphenol), 2,2'-ethylidenebis(4-*sec*-butyl-6-*tert*-butylphenol), 1,1,3-tris(2-methyl-4-hydroxy-5-*tert*-butylphenyl)butane, 1,3,5-tris(2,6-dimethyl-3-hydroxy-4-*tert-*butylbenzyl)isocyanurate, 1,3,5-tris(3,5-di-*tert*-butyl-4-hydroxybenzyl)isocyanurate, 1,3,5-tris(3,5-di-*tert*-butyl-4-hydroxybenzyl)-2,4,6-trimethylbenzene, 2-*tert*-butyl-4-methyl-6-(2-acryloyloxy-3-*tert*-butyl-5-methylbenzyl)phenol, stearyl(3,5-di-*tert*-butyl-4-hydroxyphenyl)propionate, pentaerythritoltetrakis[3-(3,5-di-*tert*-butyl-4-hydroxyphenyl)propionate], thiodiethyleneglycolbis[(3,5-di-*tert*-butyl-4-hydroxyphenyl)propionate], 1,6-hexamethylenebis[(3,5-di-*tert*-butyl-4-hydroxyphenyl)propionate], bis[3,3-bis(4-hydroxy-3-*tert*-butylphenyl)butyric acid]glycol ester, bis[2-*tert*-butyl-4-methyl-6-(2-hydroxy-3-*tert*-butyl-5-methylbenzyl)phenyl]terephthalate, 1,3,5-tris[(3,5-di-*tert*-butyl-4-hydroxyphenyl)propionyloxyethyl]isocyanurate, 3,9-bis[1,1-dimethyl-2-{(3-*tert*-butyl-4-hydroxy-5-methylphenyl)propionyloxy}ethyl]-2,4,8,10-tetraoxaspiro[5,5]undecane, and triethyleneglycolbis[(3-*tert*-butyl-4-hydroxy-5-methylphenyl)propionate]. These phenol-based antioxidants may be used singly, or in combination of two or more kinds thereof.

Examples of the phosphite-based antioxidants include trisnonylphenylphosphite, tris[2-*tert*-butyl-4-(3-*tert*-butyl-4-hydroxy-5-methylphenylthio)-5-methylphenyl]phosphite, tridecylphosphite, octyldiphenylphosphite, didecylmonophenylphosphite, bis(tridecyl)pentaerythritoldiphosphite, bis(nonylphenyl)pentaerythritoldiphosphite, bis(2,4-di-*tert*-butylphenyl)pentaerythritoldiphosphite, bis(2,6-di-*tert*-butyl-4-methylphenyl)pentaerythritoldiphosphite, bis(2,4,6-tri-*tert-*butylphenyl)pentaerythritoldiphosphite, bis(2,4-dicumylphenyl)pentaerythritoldiphosphite, tetrakis(tridecyl)isopropylidenediphenoldiphosphite, tetrakis(tridecyl)-4,4'-n-butylidenebis(2-*tert*-butyl-5-methylphenol)diphosphite, hexakis(tridecyl)-1,1,3-tris(2-methyl-4-hydroxy-5-*tert*-butylphenyl)butanetriphosphite, tetrakis(2,4-di-*tert-*butylphenyl)biphenylenediphosphonite, 9,10-dihydro-9-oxa-10-phosphaphenanthrene-10-oxide, 2,2'-methylenebis(4,6-*tert*-butylphenyl)-2-ethylhexylphosphite, 2,2'-methylenebis(4,6-*tert*-butylphenyl)-octadecylphosphite, 2,2'-ethylidenebis(4,6-di-tert-butylphenyl)fluorophosphite, tris(2-[(2,4,8,10-tetrakis-*tert-*butyldibenzo[d,f][1,3,2]dioxaphosphepin-6-yl)oxy]ethyl)amine, and a phosphite of 2-ethyl-2-butylpropyleneglycol and 2,4,6-tri-*tert*-butylphenol. These phosphite-based antioxidants may be used singly, or in combination of two or more kinds thereof.

Examples of the thioether-based antioxidants include 3,3'-thiodipropionate, alkyl(C₁₂₋₁₄)thiopropionate, di(lauryl)-3,3'-thiodipropionate, ditridecyl 3,3'-thiobispropionate, di(myristyl)-3,3'-thiodipropionate, di(stearyl)-3,3'-thiodipropionate, di(octadecyl)-3,3'-thiodipropionate, lauryl stearyl thiodipropionate, tetrakis[methylene-3-(dodecylthio)propionate]methane, thiobis(2-*tert*-butyl-5-methyl-4,1-phenylene)bis(3-(dodecylthio)propionate), 2,2'-thiodiethylenebis(3-aminobutenoate), 4,6-bis(octylthiomethyl)-o-cresol, 2,2'-thiodiethylenebis[3-(3,5-di-*tert*-butyl-4-hydroxyphenyl)propionate], 2,2'-thiobis(4-methyl-6-*tert*-butylphenol), 2,2'-thiobis(6-*tert*-butyl-p-cresol), 2-ethylhexyl-(3,5-di-*tert*-butyl-4-hydroxybenzyl)thioacetate, 4,4'-thiobis(6-*tert*-butyl-3-methylphenol), 4,4'-thiobis(4-methyl-6-*tert*-butylphenol), 4,4'-[thiobis(methylene)]bis(2-*tert*-butyl-6-methyl-1-hydroxybenzyl), bis(4,6-di-*tert*-butylphenol-2-yl)sulfide, tridecyl-3,5-di-*tert*-butyl-4-hydroxybenzylthioacetate, 1,4-bis(octylthiomethyl)-6-methylphenol, 2,4-bis(dodecylthiomethyl)-6-methylphenol, distearyl-disulfide, and bis(methyl-4-[3-n-alkyl(C₁₂/C₁₄)thiopropionyloxy]5-*tert*-butylphenyl)sulfide. These thioether-based antioxidants may be used singly, or in combination of two or more kinds thereof.

Examples of the other antioxidants include: nitrone compounds such as N-benzyl-α-phenylnitrone, N-ethyl-α-methylnitrone, N-octyl-α-heptylnitrone, N-lauryl-α-undecylnitrone, N-tetradecyl-α-tridecylnitrone, N-hexadecyl-α-pentadecylnitrone, N-octyl-α-heptadecylnitrone, N-hexadecyl-α-heptadecylnitrone, N-octadecyl-α-pentadecylnitrone, N-heptadecyl-α-heptadecylnitrone, and N-octadecyl-α-heptadecylnitrone; and benzofuran compounds such as 3-arylbenzofuran-2(3H)-one, 3-(alkyloxyphenyl)benzofuran-2-one, 3-(acyloxyphenyl)benzofuran-2(3H)-one, 5,7-di-*tert*-butyl-3-(3,4-dimethylphenyl)-benzofuran-2(3H)-one, 5,7-di-*tert*-butyl-3-(4-hydroxyphenyl)-benzofuran-2(3H)-one, 5,7-di-*tert*-butyl-3-{4-(2-hydroxyethoxy) phenyl}-benzofuran-2(3H)-one, 6-(2-(4-(5,7-di-*tert*-2-oxo-2,3-dihydrobenzofuran-3-yl)phenoxy)ethoxy)-6-oxohexyl-6-((6-hydroxyhexanoyl)oxy)hexanoate, and 5-di-*tert*-butyl-3-(4-((15-hydroxy-3,6,9,13-tetraoxapentadecyl)oxy)phenyl)benzofuran-2(3H)one. These other antioxidants may be used singly, or in combination of two or more kinds thereof.

Examples of the light stabilizers include 2,2,6,6-tetramethyl-4-piperidylstearate, 1,2,2,6,6-pentamethyl-4-piperidylstearate, 2,2,6,6-tetramethyl-4-piperidylbenzoate, bis(2,2,6,6-tetramethyl-4-piperidyl)sebacate, bis(1,2,2,6,6-pentamethyl-4-piperidyl)sebacate, tetrakis(2,2,6,6-tetramethyl-4-piperidyl)-1,2,3,4-butanetetracarboxylate, tetrakis (1,2,2,6,6-pentamethyl-4-piperidyl)-1,2,3,4-butanetetracarboxylate, bis(2,2,6,6-tetramethyl-4-piperidyl), bis(tridecyl)-1,2,3,4-butanetetracarboxylate, bis(1,2,2,6,6-pentamethyl-4-piperidyl), bis(tridecyl)-1,2,3,4-butanetetracarboxylate, bis(1,2,2,6,6-pentamethyl-4-piperidyl)-2-butyl-2-(3,5-di-*tert*-butyl-4-hydroxybenzyl)malonate, 1-(2-hydroxyethyl)-2,2,6,6-tetramethyl-4-piperidinol/diethylsuccinate polycondensate, 1,6-bis (2,2,6,6-tetramethyl-4-piperidyl amino)hexane/2,4-dichloro-6-morpholino-s-triazine polycondensate, 1,6-bis(2,2,6,6-tetramethyl-4-piperidylamino)hexane/2,4-dichloro-6-*tert*-octylamino-s-triazine polycondensate, 1,5,8,12-tetrakis[2,4-bis(N-butyl-N-(2,2,6,6-tetramethyl-4-piperidyl)amino)-s-triazin-6-yl]-1,5,8,12-tetraazadodecane, 1,5,8,12-tetrakis[2,4-bis(N-butyl-N-(1,2,2,6,6-pentamethyl-4-piperidyl)amino)-s-triazin-6-yl]-1,5,8-12-tetraazadodecane, 1,6,11-tris[2,4-bis(N-butyl-N-(2,2,6,6-tetramethyl-4-piperidyl) amino)-s-triazin-6-yl]aminoundecane, 1,6,11-tris[2,4-bis(N-butyl-N-(1,2,2,6,6-pentamethyl-4-piperidyl)amino)-s-triazin-6-yl]aminoundecane, bis(2,2,6,6-tetramethyl-1-octyloxy-4-piperidyl)decanedioate, bis(2,2,6,6-tetramethyl-1-undecyloxypiperidin-4-yl)carbonate, 2,2,6,6-tetramethyl-4-piperidylmethacrylate, 1,2,3,4-butanetetracarboxylate, a polymer of 2,2-bis(hydroxymethyl)-1,3-propanediol and 3-hydroxy-2,2-dimethylpropanal, 1,2,2,6,6-pentamethyl-4-piperidinylester, 1,3-bis(2,2,6,6-tetramethylpiperidin-4-yl)2,4-ditridecylbenzene-1,2,3,4,tetracarboxylate, bis(1-octyloxy-2,2,6,6-tetramethyl-4-piperidyl)sebacate, poly[[6-[(1,1,3,3-tetramethylbutyl)amino]-1,3,5-triazine-2,4-diyl][(2,2,6,6-tetramethyl-4-piperidinyl)imino]-1,6-hexanediyl[(2,2,6,6-tetramethyl-4-piperidinyl)imino]]), and TINUVIN NOR 371 manufactured by BASF. These light stabilizers may be used singly, or in combination of two or more kinds thereof.

Examples of the ultraviolet absorbents include: 2-hydroxybenzophenones such as 2,4-dihydroxybenzophenone, 2-hydroxy-4-methoxybenzophenone, 2-hydroxy-4-octoxybenzophenone, and 5,5'-methylenebis(2-hydroxy-4-methoxybenzophenone); 2-(2'-hydroxyphenyl)benzotriazoles such as 2-(2'-hydroxy-5'-methylphenyl)benzotriazole, 2-(2'-hydroxy-3',5'-di-*tert*-butylphenyl)-5-chlorobenzotriazole, 2-(2'-hydroxy-3'-*tert*-butyl-5'-methylphenyl)-5-chlorobenzotriazole, 2-(2'-hydroxy-5'-*tert*-octylphenyl)benzotriazole, 2-(2'-hydroxy-3',5'-dicumylphenyl)benzotriazole, 2,2'-methylenebis(4-*tert*-octyl-6-(benzotriazolyl)phenol), and 2-(2'-hydroxy-3'-*tert*-butyl-5'-carboxyphenyl)benzotriazole; benzoates such as phenyl salicylate, resorcinol monobenzoate, 2,4-di-*tert*-butylphenyl-3,5-di-*tert*-butyl-4-hydroxybenzoate, 2,4-di-*tert*-amylphenyl-3,5-di-*tert*-butyl-4-hydroxybenzoate, and hexadecyl-3,5-di-*tert*-butyl-4-hydroxybenzoate; substituted oxanilides such as 2-ethyl-2'-ethoxyoxanilide and 2-ethoxy-4'-dodecyloxanilide; cyanoacrylates such as ethyl-α-cyano-β,β-diphenylacrylate and methyl-2-cyano-3-methyl-3-(p-methoxyphenyl)acrylate; and triaryltriazines such as 2-(2-hydroxy-4-octoxyphenyl)-4,6-bis(2,4-di-*tert*-butylphenyl)-s-triazine, 2-(2-hydroxy-4-methoxyphenyl)-4,6-diphenyl-s-triazine, and 2-(2-hydroxy-4-propoxy-5-methylphenyl)-4,6-bis (2,4-di-*tert*-butylphenyl)-s-triazine. These ultraviolet absorbents may be used singly, or in combination of two or more kinds thereof.

Examples of the crystal nucleating agents include: metal carboxylates such as sodium benzoate, 4-*tert*-butyl benzoate aluminum salt, sodium adipate, and disodium bicyclo[2.2.1]heptane-2,3-dicarboxylate; phosphate metal salts such as sodium bis(4-*tert-*butylphenyl)phosphate, sodium-2,2'-methylenebis(4,6-di-*tert*-butylphenyl)phosphate, and lithium-2,2'-methylenebis(4,6-di-*tert*-butylphenyl)phosphate; polyvalent alcohol derivatives such as dibenzylidenesorbitol, bis(methylbenzylidene)sorbitol, bis(3,4-dimethylbenzylidene)sorbitol, bis(p-ethylbenzylidene)sorbitol, bis(dimethylbenzylidene)sorbitol, 1,2,3-trideoxy-4,6:5,7-bis-O-((4-propylphenyl)methylene)-nonitol, 1,3:2,4-bis (p-methylbenzylidene) sorbitol, and 1,3:2,4-bis-O-benzylidene-D-glucitol (dibenzylidenesorbitol); and amide compounds such as N,N',N"-tris[2-methylcyclohexyl]-1,2,3-propanetricarboxamide, N,N',N"-tricyclohexyl-1,3,5-benzenetricarboxamide, N,N'-dicyclohexyl-naphthalenedicarboxamide, and 1,3,5-tri(dimethylisopropoylamino)benzene. These crystal nucleating agents may be used singly, or in combination of two or more kinds thereof.

Examples of the plasticizers include: epoxy-based plasticizers such as epoxidized soybean oil, epoxidized linseed oil, and epoxidized fatty acid octyl ester; methacrylate-based plasticizers; polyester-based plasticizers such as polycondensates of dicarboxylic acids and polyvalent alcohols, and polycondensates of polyvalent carboxylic acids and the polyvalent alcohols; polyether ester-based plasticizers such as polycondensates of dicarboxylic acids, polyvalent alcohols, and alkylene glycol, polycondensates of dicarboxylic acids, polyvalent alcohols, and arylene glycol, polycondensates of polyvalent carboxylic acids, polyvalent alcohols, and alkylene glycol, and polycondensates of polyvalent carboxylic acids, polyvalent alcohols, and arylene glycol; aliphatic ester-based plasticizers such as adipate ester and succinate ester; aromatic ester-based plasticizers such as phthalate ester, terephthalate ester, trimellitate ester, pyromellitate ester, and benzoic ester. These plasticizers may be used singly, or in combination of two or more kinds thereof.

Examples of the lubricants include: pure hydrocarbon-based lubricants such as liquid paraffins, native paraffins, micro waxes, synthetic paraffins, low molecular weight polyethylenes, and polyethylene waxes; halogenated hydrocarbon-based lubricants; fatty acid-based lubricants such as higher fatty acids and hydroxy fatty acids; fatty acid amide-based lubricants such as fatty acid amides and bis-fatty acid amides; ester-based lubricants such as lower alcohol esters of fatty acids, polyvalent alcohol esters of fatty acids such as glyceride, polyglycol esters of fatty acids, and fatty alcohol esters of fatty acids (ester waxes); metal soaps, fatty alcohols, polyvalent alcohols, polyglycols, polyglycerols, partial esters of fatty acids and polyvalent alcohols, lubricants based on partial esters of fatty acids, polyglycols, and polyglycerols, silicone oils, and mineral oils. These lubricants may be used singly, or in combination of two or more kinds thereof.

Examples of flame retardants other than the polyphosphate (A) according to the present invention include: aromatic phosphates such as triphenyl phosphate, tricresyl phosphate, trixylenyl phosphate, cresyl diphenyl phosphate, cresyl-2,6-dixylenylphosphate, resorcinolbis(diphenylphosphate), (1-methylethylidene)-4,1-phenylenetetraphenyldiphosphate, 1,3-phenylenetetrakis(2,6-dimethylphenyl)phosphate, and trade names "ADK STAB FP-500", "ADK STAB FP-600", "ADK STAB FP-800", and "ADK STAB FP-900 L" manufactured by ADEKA CORPORATION; phosphonates such as divinyl phenylphosphonate, diallyl phenylphosphonate, and (1-butenyl)phenylphosphonate; phosphinates such as phenyl diphenylphosphinate, methyl diphenylphosphinate, and 9,10-dihydro-9-oxa-10-phosphaphenanthrene-10-oxide derivative; dialkyl phosphinate such as aluminum diethylphosphinate and zinc diethylphosphinate; phosphazene compounds such as bis(2-allylphenoxy)phosphazene and dicresylphosphazene; inorganic phosphorus-based flame retardants such as red phosphorus; metal hydroxides such as magnesium hydroxide and aluminum hydroxide; and bromine-based flame retardants such as brominated bisphenol A type epoxy resin, brominated phenol novolac type epoxy resin, hexabromobenzene, pentabromotoluene, ethylenebis(pentabromophenyl), ethylenebistetrabromophthalimide, 1,2-dibromo-4-(1,2-dibromoethyl)cyclohexane, tetrabromocyclooctane, hexabromocyclododecane, bis(tribromophenoxy)ethane, brominated polyphenylene ether, brominated polystyrene and 2,4,6-tris(tribromophenoxy)-1,3,5-triazine, tribromophenyl maleimide, tribromophenyl acrylate, tribromophenyl methacrylate, tetrabromo bisphenol A type dimethacrylate, pentabromobenzyl acrylate, and brominated styrene. These flame retardants may be used singly, or in combination of two or more kinds thereof.

Examples of the antistatic agents include: cationic antistatic agents such as fatty acid quaternary ammonium ion salts and polyamine quaternary salts; anionic antistatic agents such as higher alcohol phosphate salts, higher alcohol EO adducts, polyethylene glycol fatty acid esters, anionic type alkylsulfonate salts, higher alcohol sulfate salts, higher alcohol ethylene oxide adduct sulfate salts, and higher alcohol ethylene oxide adduct phosphate salts; nonionic antistatic agents such as polyvalent alcohol fatty acid esters, polyglycol phosphates, and polyoxyethylene alkylarylethers; amphoteric type alkylbetaines such as alkyl dimethyl aminoacetic acid betaines; and amphoteric antistatic agents such as imidazoline type ampholytic surfactants. These antistatic agents may be used singly, or in combination of two or more kinds thereof.

Examples of the fillers may include talc, mica, calcium carbonate, calcium oxide, calcium hydroxide, magnesium carbonate, magnesium hydroxide, magnesium oxide, magnesium sulphate, aluminum hydroxide, barium sulfate, glass powders, glass fibers, clay, dolomite, silica, alumina, potassium titanate whiskers, wollastonite, fibrous magnesiumoxysulfate, and montmorillonite, and the particle diameters (fiber diameters, fiber lengths, and aspect ratios in fibrous form) thereof can be selected and used as appropriate. These fillers may be used singly, or in combination of two or more kinds thereof. Moreover, the fillers surface-treated as needed can be used.

Examples of the pigments include: Pigment Reds 1, 2, 3, 9, 10, 17, 22, 23, 31, 38, 41, 48, 49, 88, 90, 97, 112, 119, 122, 123, 144, 149, 166, 168, 169, 170, 171, 177, 179, 180, 184, 185, 192, 200, 202, 209, 215, 216, 217, 220, 223, 224, 226, 227, 228, 240, and 254; Pigment Oranges 13, 31, 34, 36, 38, 43, 46, 48, 49, 51, 52, 55, 59, 60, 61, 62, 64, 65, and 71; Pigment Yellows 1, 3, 12, 13, 14, 16, 17, 20, 24, 55, 60, 73, 81, 83, 86, 93, 95, 97, 98, 100, 109, 110, 113, 114, 117, 120, 125, 126, 127, 129, 137, 138, 139, 147, 148, 150, 151, 152, 153, 154, 166, 168, 175, 180, and 185; Pigment Greens 7, 10, and 36; Pigment Blues 15, 15:1, 15:2, 15:3, 15:4, 15:5, 15:6, 22, 24, 56, 60, 61, 62, and 64; and Pigment Violets 1, 19, 23, 27, 29, 30, 32, 37, 40, and 50. These pigments may be used singly, or in combination of two or more kinds thereof.

Examples of the dyes include azo dyes, anthraquinone dyes, indigoid dyes, triarylmethane dyes, xanthene dyes, alizarin dyes, acridine dyes, stilbene dyes, thiazole dyes, naphthol dyes, quinoline dyes, nitro dyes, indamine dyes, oxazine dyes, phthalocyanine dyes, and cyanine dyes. These dyes may be used singly, or in combination of two or more kinds thereof.

One or more selected from the additives consisting of the aids, powder dust inhibitors, and other additional components described above may be blended into the above-described flame retarding composition, or may be blended into a flame-retardant resin composition including the flame retarding composition and a thermoplastic resin.

The flame retarding composition of the present invention is effective at allowing a synthetic resin to be flame-retardant, and is blended into the synthetic resin and preferably used as a flame-retardant resin composition.

The flame-retardant resin composition of the present invention will now be described.

### <Flame-Retardant Resin Composition>

The flame-retardant resin composition of the present invention includes the above-described flame retarding composition and a thermoplastic resin.

The content of the above-described flame retarding composition is typically 10 to 400 parts by mass, preferably 15 to 200 parts by mass, and more preferably 20 to 70 parts by mass with respect to 100 parts by mass of the thermoplastic resin. As a result, the flame resistance of the thermoplastic resin can be sufficiently improved.

Examples of the above-described thermoplastic resin include synthetic resins such as polyolefin resins, styrenic resins, polyester resins, polyether resins, polycarbonate resins, polyamide resins, and halogen-containing resins. These may be used singly, or in combination of two or more kinds thereof.

Further, thermoplastic resins such as petroleum resins, coumarone resins, polyvinyl acetate, acryl resins, polymethyl methacrylate, polyvinyl alcohols, polyvinyl formal, polyvinyl butyral, polyphenylene sulfide, polyurethane, cellulose resins, polyimide resins, polysulfone, and liquid crystal polymers, and blends thereof can be used as the examples of the above-described thermoplastic resin.

Moreover, the above-described thermoplastic resin may be thermoplastic elastomers such as isoprene rubber, butadiene rubber, ethylene-propylene rubber, ethylene-propylene-diene rubber, acrylonitrile-butadiene copolymer rubber, styrene-butadiene copolymer rubber, olefinic elastomer, styrenic elastomer, polyester-based elastomer, nitrile-based elastomer, nylon-based elastomer, vinyl chloride-based elastomer, polyamide-based elastomer, and polyurethane-based elastomer, and these thermoplastic elastomers may be used together. Specific examples of the above-described thermoplastic resin include, but are not particularly limited to: polyolefin resins such as polypropylene, high-density polyethylene, low-density polyethylene, linear low-density polyethylene, polybutene-1, 3-polymethylpentene, 4-polymethylpentene, and α-olefin polymers such as ethylene/propylene block or random copolymers; thermoplastic straight-chain polyester resins such as polyethylene terephthalate, polybutylene terephthalate, and polyhexamethylene terephthalate; polysulfide-based resins such as polyphenylene sulfide; polylactic acid-based resins such as polycaprolactone; straight-chain polyamide resins such as polyhexamethylene adipamide; and crystalline polystyrene resins such as syndiotactic polystyrene.

These thermoplastic resins can be used regardless of a molecular weight, a polymerization degree, a density, a softening point, the rate of insoluble matter in a solvent, the degree of stereoregularity, the presence or absence of a catalyst residue, the kind and blending rate of a monomer as a raw material, the kind of a polymerization catalyst (for example, a Ziegler catalyst, a metallocene catalysts, or the like), or the like. Among these thermoplastic resins, one or more selected from the group consisting of polyolefin resins, polystyrene resins, and copolymers thereof are preferred, polyolefin resins are more preferred, polypropylene, high-density polyethylene, low-density polyethylene, and linear low-density polyethylene are still more preferred, and cases in which thermoplastic elastomers are used together with them are also preferred, in view of enabling imparting of excellent flame resistance.

The flame-retardant resin composition of the present invention may include one or more selected from the additives consisting of the aids, powder dust inhibitors, and other components described above, as needed, as well as the flame retarding composition of the present invention. These may be used singly, or in combination of two or more kinds thereof.

The content of each of the additives (excluding a filler and a flame retardant other than the polyphosphate (A) according to the present invention) in the flame-retardant resin composition of the present invention is, for example, 0.001 to 15 parts by mass, preferably 0.005 to 10 parts by mass, and more preferably 0.01 to 5 parts by mass with respect to 100 parts by mass of the thermoplastic resin. Setting of such a numerical range, improvement in the effects of the additives is obtained.

In the case of blending the flame-retardant resin composition of the present invention with a filler, the content of the filler is, for example, 1 to 100 parts by mass, preferably 3 to 80 parts by mass, and more preferably 5 to 50 parts by mass with respect to 100 parts by mass of the thermoplastic resin.

In the case of blending the flame-retardant resin composition of the present invention with a flame retardant other than the polyphosphate(A) according to the present invention, the content of the flame retardant is, for example, 1 to 200 parts by mass, preferably 3 to 150 parts by mass, and more preferably 5 to 80 parts by mass with respect to 100 parts by mass of the thermoplastic resin.

When a polyolefin resin or an olefinic elastomer is used as the thermoplastic resin, the above-described flame-retardant resin composition preferably contains a known neutralizer to neutralize a catalyst residue in the resin as long as the effects of the present invention are not impaired. Examples of the neutralizer include: fatty acid metal salts such as calcium stearate, lithium stearate, sodium stearate, and magnesium stearate; fatty acid amide compounds such as ethylenebis(stearic acid amide), ethylenebis(12-hydroxystearic acid amide), and stearic acid amide; and inorganic compounds such as hydrotalcite. These neutralizers may be used singly, or in combination of two or more kinds thereof. The amount of these neutralizers used is preferably an amount to of 0.001 to 3 parts by mass, and more preferably an amount of 0.01 to 1 part by mass with respect to 100 parts by mass of the thermoplastic resin.

A method of producing the above-described flame-retardant resin composition will now be described.

The flame-retardant resin composition of the present invention can be obtained by mixing the flame retarding composition and thermoplastic resin described above. The above-described additive may be mixed as needed. The additive may be mixed in the flame retarding composition, or may be mixed in the mixture of the flame retarding composition and the thermoplastic resin.

As a method of mixing the flame retarding composition and thermoplastic resin described above, a known method commonly used can be applied on an as-is basis. Examples thereof include a method of mixing the flame retarding composition, the thermoplastic resin, and, as needed, the additive by a mixer such as a usual blender or mixer, a method in which melt-kneading is performed by an extruding machine or the like, and a method in which mixing with a solvent is performed, and solution casting is performed.

The flame-retardant resin composition of the present invention can be used in various forms, and examples thereof include pellet forms, granular forms, and powder forms. Pellet forms are preferred from the viewpoint of handleability.

### <Molded Article>

A molded article of the present invention is formed by using the flame-retardant resin composition described above. The molded article can be produced by using and molding the flame-retardant resin composition described above.

Examples of the above-described molding method include, but are not limited to, injection molding methods, extrusion molding methods, blow molding methods, rotational molding methods, vacuum molding methods, inflation molding methods, calender molding methods, slash molding methods, dip molding methods, foam molding methods, and additional production methods. Among them, injection molding methods, extrusion molding methods, and blow molding methods are preferred.

As a result, molded articles having various shapes such as resin plates, sheets, films, and special shapes can be produced.

The molded article formed by using the flame-retardant resin composition of the present invention can be used in various applications, and can be utilized in various applications such as, for example, electrical/electronic components, machine components, optical instruments, building members, automobile components, and daily commodities. Among them, use in electrical/electronic components and building members can be preferably performed from the viewpoint of flame resistance.

The flame-retardant resin composition of the present invention and the molded article thereof can be used in wide industrial fields such as, for example, electrical, electronic, communication, agriculture, forestry, fishery, mining, construction, food, fiber, clothing, medical, coal, petroleum, rubber, leather, automobile, precision instrument, wood, building material, civil engineering, furnishings, printing, and music instrument fields. Specifically, the flame-retardant resin composition of the present invention and the molded article thereof can be used in office and OA instruments such as printers, personal computers, word processors, keyboards, PDAs (small-sized information terminal machines), telephones, copying machines, facsimiles, ECRs (electronic cash registers), electronic calculators, electronic notes, cards, holders, and stationery; household electric instruments such as washing machines, refrigerators, cleaners, microwave ovens, lighting equipment, game machines, flat-irons, and kotatsues; AV instruments such as TVs, VTRs, video cameras, radio and cassette players, tape-recorders, mini discs, CD players, speakers, and liquid crystal displays; electrical/electronic components such as connectors, relays, capacitors, switches, printed circuit boards, coil bobbins, semiconductor sealing materials, LED sealing materials, electric wires, cables, transformers, deflection yokes, cabinet panels, and watches; communication instruments; and the like.

Moreover, the flame-retardant resin composition of the present invention and the molded article thereof can be used in the field of each of, for example, the materials of automobiles, vehicles, ships, aircraft, buildings, and houses, such as seats (fillers, outer materials, and the like), belts, roof covers, compatible tops, arm rests, door trims, rear package trays, carpets, mats, sun visors, wheel covers, mattress covers, air bags, insulating materials, hand straps, hand strap strips, electric wire covering materials, electric insulating materials, coatings, coating materials, facing materials, floor materials, corner walls, carpets, wall paper, wall covering materials, packaging materials, interior materials, roofing materials, deck materials, wall materials, pillar materials, floor-plates, fence materials, skeletons and cavetti, window and door shaped materials, shingles, building panels, terraces, balconies, acoustical insulation boards, thermal insulating boards, and window materials; construction materials and building materials; household goods and sporting goods such as clothing, curtains, bed sheets, laminated boards, synthetic fiber plates, carpets, doorsteps, sheets, buckets, hoses, containers, glasses, bags, cases, goggles, skis, rackets, tents, and music instruments; and the like.

The embodiments of the present invention have been described above; however, the embodiments are illustrative of the present invention, and various configurations other than the above can also be adopted. Moreover, the present invention is not limited to the embodiments described above, and modification, improvement, and the like in a scope in which the objective of the present invention can be achieved are included in the present invention.

### EXAMPLES

The present invention is described in detail below with reference to Examples, but the present invention is not limited at all to the description of these Examples.

### <Production Example 1>

### Production of (a1) Components (Melamine Salts 1 to 2)

Melamine orthophosphate was subjected to heat condensation reaction in a solid-phase state at 220°C for 6 hours to produce a melamine salt 1 containing melamine pyrophosphate as a main component. The melamine salt 1 was used on an as-is basis without being purified. The purity of the melamine pyrophosphate in the melamine salt 1 was 98.5%.

The melamine salt 1 obtained as described above was pulverized using a jet mill pulverizing machine (Co-Jet system α-mk IV, manufactured by SEISHIN ENTERPRISE Co., Ltd.) to obtain a melamine salt 2.

### <Production Example 2>

### Production of (a-2) Components (Piperazine Salts 1 to 5)

Piperazine diphosphate was subjected to heat condensation reaction in a solid-phase state at 250°C for 1 hour to produce a piperazine salt 1 containing piperazine pyrophosphate as a main component. The piperazine salt 1 was used on an as-is basis without being purified. The purity of the piperazine pyrophosphate in the piperazine salt 1 was 99.0%.

The piperazine salt 1 obtained as described above was pulverized using a jet mill pulverizing machine (Co-Jet system α-mk IV, manufactured by SEISHIN ENTERPRISE Co., Ltd.) to obtain a piperazine salt 2. Moreover, the piperazine salt 1 was pulverized by a food mixer (BM-RT08, manufactured by Zojirushi Corporation), and sieved through a sieve having an opening of 250 µm, 150 µm, and 75 µm. The sieving was performed using an ultrasonic wave sieve (DGS35-50-S, manufactured by Artech Ultrasonic Systems) and a digital microplate shaker (6780-NP, manufactured by CORNING) under conditions of an ultrasonic power of 50 W, an ultrasonic frequency of 35 kHz, and a rotation speed of 300 rpm. A piperazine salt that had been passed through 75 µm path was regarded as a piperazine salt 3, a piperazine salt that had been passed through 150 µm and had not been passed through 75 µm was regarded as a piperazine salt 4, and a piperazine salt that had been passed through 250 µm and had not been passed through 150 µm was regarded as a piperazine salt 5.

The purities of the melamine salt 1 and piperazine salt 1 described above were measured using an ion chromatograph measurement apparatus ICS-2100 (manufactured by Thermo Fisher Scientific K.K.), Dionex IonPac AS-19 column (manufactured by Thermo Fisher Scientific K.K.), and an electric conductivity detector.

### <Production of Flame Retarding Compositions of A1 to A4, B1 to B4, C1 to C4, D1 to D4, And E1 to E4>

Each component was measured at a rate set forth in the following Tables 2 to 3, and mixed for 10 minutes using a Henschel mixer (FM100, manufactured by Mitsui Mining Co., Ltd.) at a rotation speed of 850 rpm and an intra-bath temperature of 150°C to obtain flame retarding compositions A1 to A4, B1 to B4, C1 to C4, D1 to D4, and E1 to E4.

### (Measurement of Particle Size Distribution)

For each of each melamine salt, each piperazine salt, and each flame retarding composition obtained as described above, 20 mg of sample and 5 mL of methanol were put in 10 mL of a vial, and subjected to ultrasonic irradiation for 3 minutes under conditions of an output of 70 W and a frequency of 42 kHz to obtain a dispersion solution with each composition. A total amount of the obtained dispersion solution was subjected to particle size distribution measurement. The measurement was performed on a volumetric basis using a laser diffraction-type particle size distribution measurement instrument (Microtrac MT3000II) under wet conditions (solvent: methanol, ultrasonic irradiation (30 W, 40 kHz): 3 minutes, degassing: twice).

The particle diameters D₅₀ corresponding to an accumulation of 50% of each melamine salt, each piperazine salt, and each flame retarding composition, and the rates of (p1) particles having a particle diameter of less than 80 µm, (p2) particles having a particle diameter of 80 µm or more and less than 170 µm, and (p3) particles having a particle diameter of 170 µm or more were determined based on the integrated value in the particle size distribution measured as described above. The results are set forth in the following Tables 1 to 3.

### [Examples 1 to 10 and Comparative Examples 1 to 10]

### <Production of Flame-Retardant Resin Composition>

Among compositions set forth in the following Tables 4 to 6, a polypropylene resin composition obtained by blending each component other than the above-described flame retarding compositions was blended with the above-described flame retarding compositions A1 to A4, B1 to B4, C1 to C4, D1 to D4, and E1 to E4 at mass ratios (part(s) by mass) set forth in each aliquot table to obtain the flame-retardant resin compositions of Examples 1 to 10 and Comparative Examples 1 to 10.

### <Production of Test Piece for Evaluation Test>

The flame-retardant resin composition obtained as described above was melt-kneaded by a twin-screw extruder (TEX25α III, manufactured by The Japan Steel Works, Ltd.) under conditions of a cylinder temperature of 180 to 230°C and a screw speed of 150 rpm to obtain the pellets of the flame-retardant resin composition. The obtained pellets were injection-molded by an injection molding machine (EC60N II-1.SA, manufactured by Toshiba Machine Co., Ltd.) under conditions of a resin temperature of 230°C and a mold temperature of 40°C to obtain a test piece of 127 mm × 12.7 mm × 1.6 mm. This test piece was used to perform evaluation of water resistance and flame resistance.

### <Evaluation of Water Resistance>

Ten test pieces produced as described above were immersed in 800 mL of ultrapure water, and left to stand at 70°C for 168 hours, followed by taking out the test pieces. The electric conductivity (µS/cm) of the water after the immersion was measured using an EC tester/HI98303N (DiST3) manufactured by Hanna. The lower electric conductivity of the water after the immersion of the test pieces means that the amount of an eluted water-soluble component is more suppressed, and water resistance is higher. The results are set forth in the following Tables 4 to 6.

### <Evaluation of Flame Resistance: UL-94V>

The test piece having a length of 127 mm, a width of 12.7 mm, and a thickness of 1.6 mm as described above was kept perpendicular, the fire of a burner was brought into contact with the lower end thereof for 10 seconds and then removed, and combustion time t1 before the fire set to the test piece went out was measured. Then, the second contact of fire was started for 10 seconds simultaneously with the fire extinction, and combustion time t2 before the fire went out was measured in a manner similar to the first manner. Moreover, whether or not dropping fire was set to cotton below the test piece was simultaneously evaluated.

Combustion ranking was conducted according to the UL-94 standards described above on the basis of the combustion times t1 and t2, whether or not the fire was set to the cotton, and the like. V-0 is the top combustion rank, followed by V-1 and V-2, in which flame resistance deteriorates with a lower combustion rank. However, a case corresponding to none of the ranks of V-0 to V-2 is regarded as NR. The combustion ranks and the measurement results of t2 are set forth in the following Tables 4 to 6. Each value of t2 in the tables is the mean value of ten values.

Moreover, the ten test pieces immersed in water in the water resistance test described above were also subjected to the evaluation of flame resistance in a similar manner. The test pieces immersed in water in the evaluation of water resistance and dried for 334 hours in a constant-temperature constant-humidity oven at 23°C and 50% RH were used in the combustion test. The combustion ranks and the measurement results of t2 are set forth in the following Tables 4 to 6. Each value of t2 in the tables is the mean value of ten values.

The details of each component in the following Tables 1 to 6 are described below.
(a1) Melamine salts 1 to 2: produced in the production example 1 described above
(a2) Piperazine salts 2 to 5: produced the production example 2 described above
(B) Silicone oil 1: dimethyl silicone oil, trade name KF96, manufactured by Shin-Etsu Chemical Co., Ltd.
(B) Silicone oil 2: methylhydrogene silicone oil, trade name KF99, manufactured by Shin-Etsu Chemical Co., Ltd.
(B) Silane coupling agent: 2-(3,4-epoxycyclohexyl)ethyltrimethoxysilane, trade name Sila-Ace S530, manufactured by JNC CORPORATION

Zinc oxide: trade name Zinc Oxide No. 1, manufactured by MITSUI MINING & SMELTING CO., LTD.

Polypropylene: impact copolymer polypropylene, trade name Prime Polypro J-754HP, manufactured by Prime Polymer Co., Ltd., melt flow rate (according to JIS K7210, load of 2.16 kg, temperature of 230°C) = 14 g/10 min

Phenol-based antioxidant: tetrakis[3-(3,5-di-tert-butyl-4-hydroxyphenyl)methyl propionate]methane, trade name ADK STAB AO-60, manufactured by ADEKA Corporation

Phosphorus-based antioxidant: tris(2,4-di-tert-butylphenyl)phosphite, trade name ADK STAB 2112, manufactured by ADEKA Corporation

Neutralizer: calcium stearate, trade name Calcium Stearate, manufactured by TANNAN KAGAKU KOGYO CO., LTD.

**[Table 1]**

| | (a1) Melamine salt 1 | (a1) Melamine salt 2 | (a2) Piperazine salt 2 | (a2) Piperazine salt 3 | (a2) Piperazine salt 4 | (a2) Piperazine salt 5 |
|---|---|---|---|---|---|---|
| (p1) Rate (% by volume) of particles having particle diameter of less than 80 µm | 49.3 | 100.0 | 100.0 | 98.2 | 8.7 | 0.0 |
| (p2) Rate (% by volume) of particles having particle diameter of 80 µm or more and less than 170 µm | 48.7 | 0.0 | 0.0 | 1.8 | 80.0 | 22.9 |
| (p3) Rate (% by volume) of particles having particle diameter of 170 µm or more | 2.0 | 0.0 | 0.0 | 0.0 | 11.3 | 77.1 |
| D₅₀ (µm) | 74.0 | 8.5 | 12.0 | 22.1 | 124.2 | 209.1 |

**[Table 2]**

| | Flame retarding composition | | | | | | | | | | | |
|---|---|---|---|---|---|---|---|---|---|---|---|---|
| | A1 | A2 | A3 | A4 | B1 | B2 | B3 | B4 | C1 | C2 | C3 | C4 |
| (a1) Melamine salt 1 | | 50 | 50 | 50 | | 40 | 40 | 40 | | 30 | 30 | 30 |
| (a1) Melamine salt 2 | 50 | | | | 40 | | | | 30 | | | |
| (a2) Piperazine salt 2 | 50 | | | | 60 | | | | 70 | | | |
| (a2) Piperazine salt 3 | | 50 | | | | 60 | | | | 70 | | |
| (a2) Piperazine salt 4 | | | 50 | | | | 60 | | | | 70 | |
| (a2) Piperazine salt 5 | | | | 50 | | | | 60 | | | | 70 |
| (B) Silicone oil 1 | | | | | | | | | | | | |
| (B) Silicone oil 2 | | | | | | | | | | | | |
| (B) Silane coupling agent | | | | | | | | | | | | |
| Zinc oxide | | | | | | | | | | | | |
| (p1) Rate (% by volume) of particles having particle diameter of less than 80 µm | 10 0.0 | 87. 7 | 48. 8 | 45. 9 | 10 0.0 | 85. 4 | 40. 1 | 36. 3 | 10 0.0 | 80. 5 | 37. 4 | 27. 2 |
| (p2) Rate (% by volume) of particles having particle diameter of 80 µm or more and less than 170 µm | 0.0 | 11. 0 | 38. 3 | 7.3 | 0.0 | 13. 1 | 45. 0 | 8.5 | 0.0 | 16. 4 | 47. 0 | 8.4 |
| (p3) Rate (% by volume) of particles having particle diameter of 170 µm or more | 0.0 | 1.3 | 12. 9 | 46. 8 | 0.0 | 1.5 | 14. 9 | 55. 2 | 0.0 | 3.1 | 15. 6 | 64. 4 |
| D₅₀ (µm) | 9.3 | 37. 0 | 57. 0 | 10 4.7 | 10. 0 | 52. 3 | 88. 0 | 17 6.0 | 11. 0 | 62. 2 | 95. 9 | 19 1.9 |

**[Table 3]**

| | Flame retarding composition | | | | | | | |
|---|---|---|---|---|---|---|---|---|
| | D1 | D2 | D3 | D4 | E1 | E2 | E3 | E4 |
| (a1) Melamine salt 1 | | 40 | 40 | 40 | | 40 | 40 | 40 |
| (a1) Melamine salt 2 | 40 | | | | 40 | | | |
| (a2) Piperazine salt 2 | 60 | | | | 60 | | | |
| (a2) Piperazine salt 3 | | 60 | | | | 60 | | |
| (a2) Piperazine salt 4 | | | 60 | | | | 60 | |
| (a2) Piperazine salt 5 | | | | 60 | | | | 60 |
| (B) Silicone oil 1 | 1 | 1 | 1 | 1 | | | | |
| (B) Silicone oil 2 | 1 | 1 | 1 | 1 | | | | |
| (B) Silane coupling agent | | | | | 1 | 1 | 1 | 1 |
| Zinc oxide | | | | | 5 | 5 | 5 | 5 |
| (p1) Rate (% by volume) of particles having particle diameter of less than 80 µm | 100.0 | 89.3 | 38.7 | 34.1 | 100.0 | 83.2 | 40.1 | 33.1 |
| (p2) Rate (% by volume) of particles having particle diameter of 80 µm or more and less than 170 µm | 0.0 | 9.3 | 47.2 | 8.8 | 0.0 | 11.4 | 41.2 | 7.8 |
| (p3) Rate (% by volume) of particles having particle diameter of 170 µm or more | 0.0 | 1.4 | 14.1 | 57.1 | 0.0 | 5.4 | 18.7 | 59.1 |
| D₅₀ (µm) | 8.7 | 31.0 | 97.6 | 174.2 | 8.9 | 34.2 | 102.8 | 185.4 |

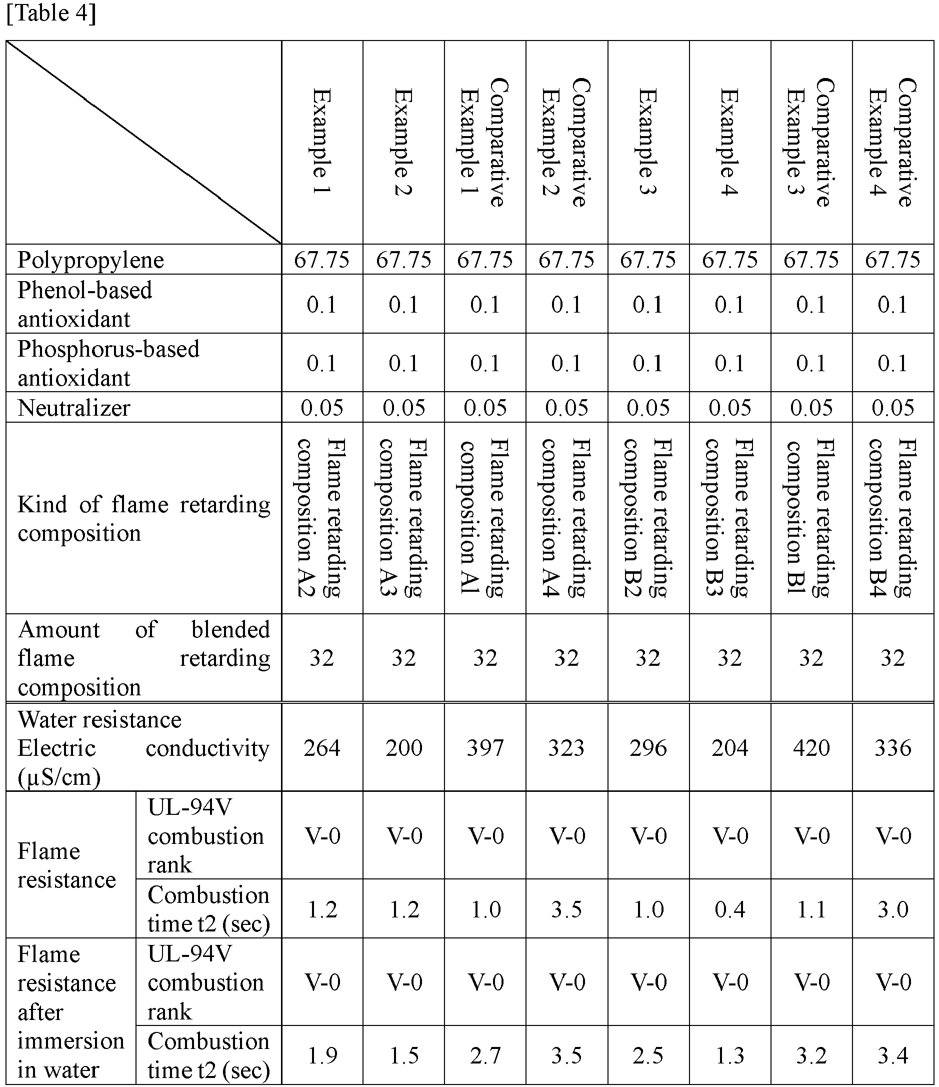

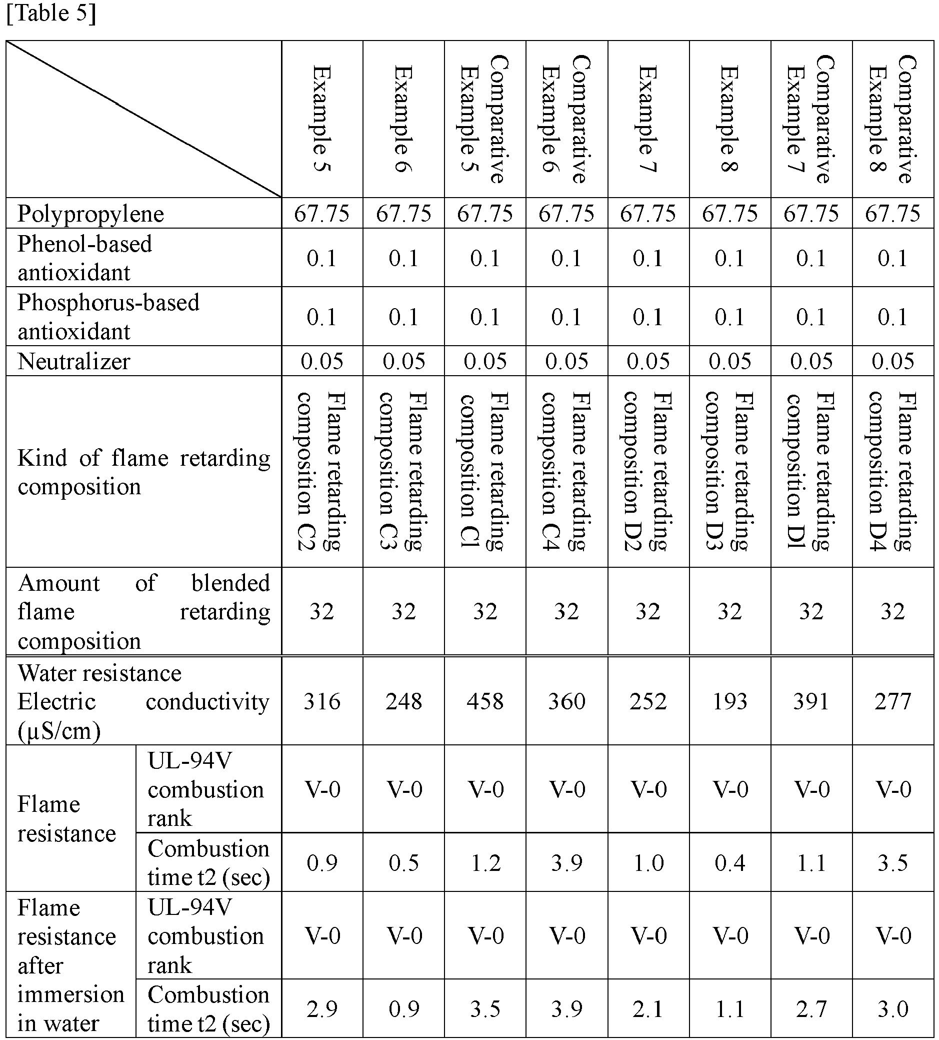

**[Table 6]**

| | | Example 9 | Example 10 | Comparative Example 9 | Comparative Example 10 |
|---|---|---|---|---|---|
| Polypropylene | | 71.75 | 71.75 | 71.75 | 71.75 |
| Phenol-based antioxidant | | 0.1 | 0.1 | 0.1 | 0.1 |
| Phosphorus-based antioxidant | | 0.1 | 0.1 | 0.1 | 0.1 |
| Neutralizer | | 0.05 | 0.05 | 0.05 | 0.05 |
| Kind of flame retarding composition | | Flame retarding composition E2 | Flame retarding composition E3 | Flame retarding composition E1 | Flame retarding composition E4 |
| Amount of blended flame retarding composition | | 28 | 28 | 28 | 28 |
| Water resistance Electric conductivity (µS/cm) | | 175 | 97 | 201 | 187 |
| Flame resistance | UL-94V combustion rank | V-0 | V-0 | V-0 | V-0 |
| | Combustion time t2 (sec) | 0.9 | 0.6 | 1.1 | 3.4 |
| Flame resistance after immersion in water | UL-94V combustion rank | V-0 | V-0 | V-2 | V-2 |
| | Combustion time t2 (sec) | 2.8 | 1.2 | 4.0 | 4.8 |

The electric conductivities of water in the water resistance tests in Examples 1 and 2 were lower than those in Comparative Examples 1 and 2, and water resistance was found to be improved by a composition using the flame retarding composition of the present invention. Moreover, with regard to the results of the evaluation of flame resistance, t2 after the immersion in water in Example 1 or 2 was shorter than that in Comparative Example 1 or 2, and flame resistance after contact with water in Example 1 or 2 was found to be superior to that in Comparative Example 1 or 2.

Similar tendencies were also seen in comparison between Examples 3 and 4 and Comparative Examples 3 and 4, comparison between Examples 5 and 6 and Comparative Examples 5 and 6, comparison between Examples 7 and 8 and Comparative Examples 7 and 8, and comparison between Examples 9 and 10 and Comparative Examples 9 and 10. In particular, in comparison between Examples 9 and 10 and Comparative Examples 9 and 10, the combustion ranks after the immersion in water in Comparative Examples 9 and 10 were downgraded to V-2.

These revealed that a resin composition blended with the flame retarding composition of the present invention exhibits the low degree of the degradation of flame resistance performance after contact with water and is excellent in water resistance.

## Claims

1. A flame retarding composition that is powdery and comprises
a polyphosphate (A),
wherein a rate of particles (p2) having a particle diameter of 80 µm or more and less than 170 µm is 9 to 99.9% by volume.

2. The flame retarding composition according to claim 1, comprising a particle size distribution in which
a rate of particles (p1) having a particle diameter of less than 80 µm is 35 to 90.9% by volume,
the rate of the particles (p2) having a particle diameter of 80 µm or more and less than 170 µm is 9 to 64.9% by volume, and
a rate of particles (p3) having a particle diameter of 170 µm or more is 0.1 to 50% by volume.

3. The flame retarding composition according to claim 1 or 2, wherein a particle diameter D₅₀ corresponding to an accumulation of 50% in a cumulative particle size distribution based on a volume is 10 µm or more and 150 µm or less.

4. The flame retarding composition according to any one of claims 1 to 3, wherein the polyphosphate (A) is one or more selected from the following components (a1) and (a2):
the component (a1): a compound represented by the following Formula (1); and
the component (a2): a compound represented by the following Formula (2), 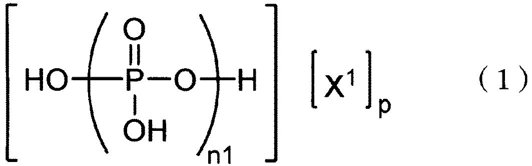
in Formula (1), n1 represents a number of 1 to 100, X¹ represents ammonia or a triazine derivative represented by the following Formula (1-A), and p represents a number satisfying 0 < p ≤ n1 + 2, 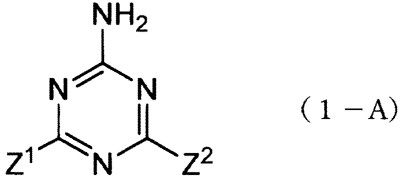
in Formula (1-A), Z¹ and Z² each independently represent any group selected from a group consisting of a -NR¹¹R¹² group, a hydroxyl group, a mercapto group, a straight-chained or branched alkyl group having 1 to 10 carbon atoms, a straight-chained or branched alkoxy group having 1 to 10 carbon atoms, a phenyl group, and a vinyl group, and R¹¹ and R¹² each independently represent a hydrogen atom, a straight-chained or branched alkyl group having 1 to 6 carbon atoms, or a methylol group, and 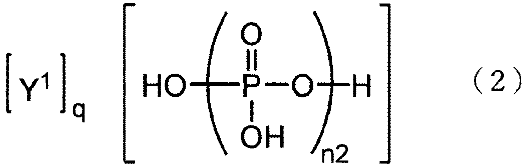
in Formula (2), n2 represents a number of 1 to 100, Y¹ represents [R²¹R²²N(CH₂)ₘNR²³R²⁴], piperazine, or a diamine comprising a piperazine ring, R²¹, R²², R²³, and R²⁴ each independently represent a hydrogen atom or a straight-chained or branched alkyl group having 1 to 5 carbon atoms, m is an integer from 1 to 10, and q represents a number satisfying 0 < q ≤ n2 + 2.

5. The flame retarding composition according to claim 4, comprising the component (a1) in which X¹ in Formula (1) is melamine.

6. The flame retarding composition according to claim 4, comprising the component (a2) in which Y¹ in Formula (2) is piperazine.

7. The flame retarding composition according to claim 4, comprising:
the component (a1) in which X¹ in Formula (1) is melamine; and
the component (a2) in which Y¹ in Formula (2) is piperazine.

8. The flame retarding composition according to claim 7, comprising:
the component (a1) in which n1 in Formula (1) is 2; and
the component (a2) in which n2 in Formula (2) is 2.

9. The flame retarding composition according to any one of claims 1 to 8, further comprising, as a component (B), one or more selected from a group consisting of silicone oils and silane coupling agents.

10. A flame-retardant resin composition comprising:
the flame retarding composition according to any one of claims 1 to 9; and
a thermoplastic resin.

11. A molded article formed by using the flame-retardant resin composition according to claim 10.
